# EUROPEAN PATENT SPECIFICATION

(11) **EP 2 922 899 B1**
(45) Date of publication and mention of the grant of the patent: **04.10.2017**
(21) Application number: 13848116.3
(22) Date of filing: 20.11.2013
(51) Int. Cl.: C08J 5/24, C08G 59/40, C08L 63/00, F03D 1/06

(54) **MOULDING MATERIAL**
FORMMASSE
MATIÈRE À MOULER

(30) Priority: 20.11.2012 AT 505292012
(43) Date of publication of application: 30.09.2015
(73) Proprietor: Hexcel Composites Limited, Duxford Cambridgeshire CB22 4QB (GB); Hexcel Holding GmbH, 4061 Pasching (AT)
(72) Inventor: MOSER, Johannes, A-4040 Linz (AT); HADLEY, Philip, Duxford CB22 4QD (GB); TIPLER, Ben, Waterbeach Cambridgeshire CB25 9QH (GB); HARRINGTON, Chris, Buckland Hertfordshire GS9 0PX (GB); VERGE, Nicholas, Letchworth Garden City Hertfordshire SG6 1DT (GB)
(74) Representative: Pols, Ronald Maarten
(86) International application number: PCT/EP2013/003503
(87) International publication number: WO 2014/079565

(56) References cited:
- EP-A1- 1 754 589
- WO-A1-2006/005559
- WO-A1-2006/082479
- "Epikote(TM) Resins for Coating, Civil Engineering and Adhesive Applications", , 31 December 2004 (2004-12-31), XP055120345, Retrieved from the Internet: URL:http://victoragencies.com/Hexion/broch ure_resins.pdf [retrieved on 2014-05-27]

## Description

The present invention relates to a moulding material, a method of making a moulding material, and a use of a moulding material, particularly but not exclusively to a precured or partially cured moulding material for use in the manufacture of wind turbine parts and/or blades.

### BACKGROUND

As wind turbine blades increase in size, they require stacks of multiple layers of composite fibre and resin reinforcement. Conventionally, resin preimpregnated fibrous reinforcement (prepreg) is laid up to form these stacks.
It is known in the art that bending wrinkles, or humps of fibres in a fibre-reinforced composite material greatly degrade the mechanical properties, particularly the strength and E-modulus, of the composite. Manufacturing of composites with highly aligned fibres is therefore very desirable.

Patent documents EP 1 754 589 A1 and WO 2006/082479 A1 disclose a method for making a continuous laminate, suitable for parts of a wind energy turbine rotor, wherein a plurality of parallel fibres are embedded in a curable matrix material, which is then cured to form a fibre reinforced laminate having upper and lower major surfaces, wherein channels are formed The presence of these channels allows the flowing of the curable material in between the layers of the continuous laminate arranged in a stack during an infusion process.

Patent document WO 2006/005559 A1 discloses a curable epoxy resin compositions, which can be suitably used for the manufacturing of wind turbine blades, comprising an epoxy resin and dicyandiamide as hardener.

### SUMMARY OF THE INVENTION

The present invention aims to obviate or at least mitigate the above described problem and/or to provide advantages generally.
According to the invention, there is provided a material, an assembly and a method as defined in any of the accompanying claims.

Specifically the present invention discloses a fiber reinforced sheet material comprising reinforcement fibres and a reinforcement resin material cured from 30 to 90%, wherein the percentage of curing represents the percentage of exothermic energy released upon curing in relation to the fully cured sheet resin; and further wherein, before curing, the reinforcement resin material comprises an epoxy resin having an epoxy equivalent weight in the range of from 200 to 500 or from 50 to 250, preferably from 100 to 200 and/or combinations thereof, and an amine hardener; the sheet material comprising a surface structure for spacing the sheet material from adjacent moulding materials comprising structure elements for conducting the flow of an infusion resin.

The present invention discloses also an assembly such the one for forming a wind turbine part or blade comprising one or more layers of a sheet material as defined above comprising in addition one or more layers of fibrous reinforcement and/or one or more layers of resin impregnated fibrous reinforcement.

In a further embodiment it is disclosed a method of producing a fiber reinforced sheet material comprising reinforcement fibres and a reinforcement resin material, comprising a. impregnating reinforcement fibres with the reinforcement resin material, said reinforcement resin material comprising an epoxy resin having an epoxy equivalent weight in the range of from 50 to 250 and an amine hardener, b. providing the sheet material comprising a surface structure for spacing the sheet material from adjacent moulding materials from adjacent moulding materials comprising structure elements for conducting the flow of and infusion resin; and c. online curing of the sheet material from 30 to 90%, wherein the percentage of curing represents the percentage of exothermic energy released upon curing in relation to the fully cured sheet resin. The use of partially cured fibre-reinforced sheet material allows for very high fibre content and highly aligned fibres in the sheets. Furthermore, the fact that the sheet is cured facilitates transportation of the sheets, as no special conditions, such as temperature range or humidity range, are required. In addition, the combination of the sheet shape with the cured state facilitates adjustment of the sheets to the shape of the mould without compromising the alignment, or in other words the straightness, of the fibres in the lay-up forming the composite member or part. This is particularly important to complex shapes such as an airfoil of wind turbine blade, where the desired fibre distribution is a complicated three-dimensional shape.
Elements of a desired shape may be cut from the sheet material to facilitate a particular lay-up to form a composite member or part.

In a highly preferred embodiment of the invention, at least some of the elements of partially cured fibre-reinforced sheet material are positioned as partially overlapping tiles so that a number of substantially parallel element edges are provided. This allows for positioning of the elements very close to the surface of the mould, and by adjusting the overlapping area between elements, almost any desired overall distribution of reinforcing fibres may be realised. Particularly, the elements may be positioned in a cross section of a wind turbine blade so that the fibres substantially resemble the distribution of water in a lake having a depth profile corresponding to the distance from the centreline of the blade to the surface of the cross section. In a particularly preferred embodiment, the substantially parallel element edges are edges, which are substantially parallel to the length of the elements of cured fibre-reinforced sheet material. This leads to a relatively short resin introduction distance and hence easier manufacturing and greater reproducibility.

The elements of partially cured fibre-reinforced sheet material may be provided along a shorter or a larger fraction of the length of the composite structure. However, it is typically preferred that the elements are positioned along at least 75% of the length of the wind turbine blade shell member, and in many cases it is more preferred that the partially cured fibre-reinforced sheet material is positioned along at least 90% of the length of the composite structure.

The partially cured fibre-reinforced sheet material comprises fibres, such as carbon fibres, glass fibres, aramid fibres, natural fibres, such as cellulose-based fibre like wood fibres, organic fibres or other fibres, which may be used for reinforcement purposes. In a preferred embodiment, the fibres are unidirectional fibres oriented parallel to the length of the cured fibre-reinforced sheet material. This provides for very high strength and stiffness in the length of the partially cured fibre-reinforced sheet material. Other orientations or combinations of orientations may be suitable in some applications. Examples of other suitable orientations are bi-axial fibres oriented at +-45°, +-30°, or 0-90° relative to the length of the sheet material; and triaxial fibres oriented at +-45° and in the length of the sheet material. Such orientations increase the edgewise and/or twisting strength and stiffness of the composite material.
The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Glass and carbon fibres are preferred carbon fibre, being preferred for wind turbine shells of length above 40 metres such as from 50 to 60 metres. The structural fibres, may be individual tows made up of a multiplicity of individual fibres and they may be woven or non-woven fabrics.

The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm. Different fibres may be used in different prepregs used to produce a cured laminate.
Exemplary layers of unidirectional structural fibres are made from HexTow® carbon fibres, which are available from Hexcel Corporation. Suitable HexTow® carbon fibres for use in making unidirectional fibre layers include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

Furthermore, the partially cured fibre-reinforced sheet id made from an epoxy resin having an epoxy equivalent weight in the range of from 200 to 500 or from 50 to 250, preferably from 100 to 200 and/or combinations thereof.

The cured fibre-reinforced sheet material may comprise more than one type of resin and more than one type of fibres In a preferred embodiment, the cured fibre-reinforced sheet material consist substantially of unidirectional carbon fibres and an epoxy-based resin.
The resin material may comprise an epoxy resin having an epoxy equivalent weight in the range of from 50 to 250, preferably from 100 to 200, and an amine hardener, the resin material being in-line curable.
We have found that resin materials having an epoxy equivalent weight in the range of from 50 to 800, from 50 to 600 or from 100 to 500 or from 100 to 350, preferably from 100 to 200 can be cured or part cured rapidly at temperatures in the range of from 80 to 200 °C, preferably from 90 to 180 °C, or from 100 to 170 °C, or from 110 to 150 °C, or from 120 to 140 °C , or from 105 to 130 °C and/or combinations of the aforesaid values and ranges. The residence time during cure ranges from 10 s to 600 s, from 20 to 500 s, preferably from 25 to 400 s, more preferably from 30 to 300 s, or from 25 to 250 s, or from 15 to 200 s, or from 20 to 120 s, or from 40 to 150 s, or from 45 to 100 s, or from 40 to 80 s and/or combinations of the aforesaid ranges and values. This enables the online production of the sheet material.

The sheet material may have a thickness ranging from 0.1 to 20 mm, preferably from 0.5 to 15 mm, more preferably from 1 to 12 mm, or from 1.5 to 10 mm, or from 2 to 7 mm or from 2 to 5 mm or from 3 to 4 mm and/or combinations of the aforesaid values and/or ranges.
As discussed, the surface texture and/or surface elements may be applied to the sheet material during online production or part cure. Alternatively, the surface texture and/or surface elements may be applied following part cure.

The sheet material is partly cured. Partly cured means that following partly curing, the sheet material may still be cured or be curable at a later stage by releasing additional exothermic energy upon curing. Part curing may be expressed as a percentage of cure, for example 75% cure means that 75% of the exothermic energy has been released upon part curing of the sheet material during its production. Upon final curing, 25% of its exothermic energy will be released as the reinforcement resin in the sheet material is processed to full cure. The sheet material is cured from 30 to 90%, or from 40 to 80%, preferably from 75 to 90% more preferably form 80 to 90% and/or combinations of the aforesaid percentages. A part cured sheet material has the advantage of being pliable to in a mould. Also this material results in a moulded assembly having improved mechanical properties in comparison to an assembly which includes fully cured sheet material.
The reactivity of an epoxy resin is indicated by its epoxy equivalent weight (EEW) the lower the EEW the higher the reactivity. The epoxy equivalent weight can be calculated as follows: (Molecular weight epoxy resin)/ (Number of epoxy groups per molecule). A way to calculate the epoxy number is as follows: Epoxy number = 100 / epoxy eq.weight. To calculate epoxy groups per molecule : (Epoxy number x molecular weight) / 100. To calculate molecular weight: (100 x epoxy groups per molecule) / epoxy number.
To calculate molecular weight: epoxy equivalent weight x epoxy groups per molecule. The present invention is particularly concerned with providing a prepreg that can be based on a reactive epoxy resin that can be cured at a lower temperature with an acceptable moulding cycle time.

The epoxy resin has a high reactivity as indicated by an EEW in the range from 200 to 500 or from 50 to 250, preferably from 100 to 200 and/or combinations thereof and the resin composition comprises the resin and an amine hardener. Suitable epoxy resins may comprise blends of two or more epoxy resins selected from monofunctional, difunctional, trifunctional and/or tetrafunctional epoxy resins.
Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.
Difunctional epoxy resins may be selected from diglycidyl ether of bisphenol F, diglycidyl ether of bisphenol A, diglycidyl dihydroxy naphthalene, or any combination thereof.
Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.
Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemical Company, Midland, MI) DEN439 (from the Dow Chemical Company), Araldite ECN 1273 (from Huntsman Advanced Materials), and Araldite ECN 1299 (from Huntsman Advanced Materials).
Commonly used curatives or hardeners for epoxy resins include active-hydrogen compounds (especially amines) and anhydrides. For the epoxide-amine reaction, each active hydrogen on the amine is considered potentially active - i.e. both hydrogens on a primary amino (-NH2) group. As a result, a functionality of four or more is not unusual for amine hardeners of epoxy resins. Examples of aliphatic polyamine hardeners (which provide for room-temperature curing), include:
H2NC2H4NHC2H4NH2 diethyelenetriamine functionality = 5
H2NC2H4NHC2H4NHC2H4NH2 triethyelenetetramine functionality = 6
The high cure rates achievable with aliphatic amine hardeners are useful for many applications including adhesives and surface coatings. However a rapid cure is just one consideration; state of cure is another. A fast cure itself is not necessarily a guarantee of a high level of cure, as the onset of vitrification effectively seals the fate of the cure. There are advantages in delaying the onset of vitrification by opting for a high temperature cure, where less active hardeners can prove easier to handle. Examples of less active NH types include: dicyandiamide (DICY), aminopolyamides or aromatic amines, for example:
(H2N)2C=NC≡N dicyandiamide functionality = 4
Dicyandiamide is therefore a preferred curative or hardener.

The partially cured fibre-reinforced sheet material is a relatively flat member having a length, which is at least ten times the width, and a width, which is at least 5 times the thickness of the sheet material. Typically, the length is 20 - 50 times the width or more and the width is 20 to 100 times the thickness or more. In a preferred embodiment, the shape of the sheet material is band-like.

It is preferred that the partially cured fibre-reinforced sheet material is dimensioned such that it is coilable. By coilable is meant that the sheet material may be coiled onto a roll having a diameter that allows for transportation in standard size containers. This greatly reduces the manufacturing cost of the composite member, as endless coils of the cured fibre-reinforced sheet material may be manufactured at a centralised facility and shipped to the blade assembly site, where it may be divided into elements of suitable size. To further enhance shipping, it is preferred that the thickness of the partially cured fibre- reinforced sheet material is chosen so that the partially cured fibre-reinforced sheet material may be coiled onto a roll with a diameter of less than 2 m based on the flexibility, stiffness, fibre type and fibre content utilised. Typically, this corresponds to a thickness up to 3.0 mm, however, for high fibre contents and stiffness, a thickness below 2.5 mm is usually more suitable On the other hand, the thick sheet materials provide for rather large steps at the outer surface, which favours the thinner sheet materials. However, the sheet materials should typically not be thinner than 0.5 mm as a large number of sheets then would be needed leading to increased manufacturing time. In a preferred embodiment, the thickness of the partially cured fibre-reinforced sheet material is about 1 5 to 2 mm.

The width of the partially cured fibre-reinforced sheet material may be constant or it may vary along the length of the sheet material. Typically, the maximum width should be more than 100 mm and to reduce the number of sheets, a width of more than 150 mm is desirable. Experimental work has shown that in many cases, the width may preferably be more than 200 mm at the widest place. On the other hand, the resin must travel between adjacent sheets in length corresponding to the width of the sheet and hence the maximum width of the sheet material is preferably less than 500 mm to allow for suitable control of resin introduction. In a preferred embodiment, the maximum width is less than 400 mm and for example if the resin is selected so that it initiates curing prior to complete infusion, it is preferred that the maximum sheet width is less than about 300 mm.

In a preferred embodiment of the method according to the invention, the partially cured fibre-reinforced sheet material is pre-treated before being positioned in the mould. Examples of pre-treatment is sandblasting, e.g. to increase the mechanical binding with the resin or to change the surface texture (see below), rinsing of the surfaces by mechanical and/or chemical means or acclimatising, e g. drying or heating. More than one type of pre-treatment of the partially cured fibre-reinforced sheet material may be suitable dependent on the conditions of the use.

The partially cured fibre-reinforced sheet material comprises highly aligned fibres and the partially cured fibre-reinforced sheet material may therefore advantageously be a pultruded cured composite material or a belt pressed cured composite. These techniques may provide the desired sheet shapes with a high fibre content of highly aligned fibres. Furthermore, these techniques are particularly suitable for manufacturing of endless lengths of material which are cut to the desired lengths.
The sheet material may have the following properties (refers to measurement standard):

| | |
|---|---|
| Fibre volume fraction (%) | 57 to 60; |
| Tensile strength(ISO527-5) (MPa) | 1600 to 2000; |
| Tensile modulus (ISO527-5) (GPa) | 120 to 150; |
| Tensile elongation (ISO527-5) (%) | 1.20 to 1.33 |
| Flexural strength (ISO527-5) (MPa) | 2100 to 2200; |
| Flexural modulus (EN2562) (GPa) | 120 to 150; |
| Interlaminar shear strength (EN2563) (MPa) | 90 to 100; |
| Compression strength (ASTM D6641) (MPa) | 1200 to 1300; |
| Compression modulus (ASTM D6641) (GPa) | 120 to 130; |
| Elongation (ASTM D6641) (%) | 0.99 |

The fiber volume fraction is the volume of the sheet material that is occupied by the fibers. The sheet may have an areal weight in the range of from 600 to 4000 g/m², preferably from 2200 to 2800 g/m², more preferably from 1000 to 1500 g/m2. The T_{g} of the resin matrix may be 100 to 150 °C, preferably 110 to 140 °C, more preferably 110 to 130 °C.
It may be very difficult to introduce resin between sheets of material if the sheets are positioned very close. This is particularly the case if the spaces between the sheets are subjected to vacuum. The partially cured fibre- reinforced sheet material is provided with a surface structure for spacing the sheet material from adjacent moulding materials comprising structure elements for conducting the flow of an infusion resin. The surface texture may comprise resin protrusions of a height above a main surface of the cured fibre-reinforced sheet material, preferably in the order of about 0.1 mm to 0.5 mm, preferably from 0.5 to 3 mm, but larger protrusions may in some cases, such as when the resin introduction distance is relatively large, be larger.
The surface texture may in addition to this or as an alternative comprise recesses, such as channels into the main surface of the partially cured fibre-reinforced sheet material, preferably the recesses are in the order of 0.1 mm to 0.5 mm below the main surface, but in some cases larger recesses may be suitable. Typically, the protrusions and/or recesses are separated by 1 cm to 2 cm and/or by 0.5 to 4 cm, but the spacing may be wider or smaller dependent on the actual size of the corresponding protrusions and/or recesses.
Surface texture of the types described above may be provided after the manufacturing of the partially cured fibre-reinforced sheet material, e.g. by sand blasting, grinding or dripping of semi-solid resin onto the surface, but it is preferred that the surface texture to facilitate introduction of resin between adjacent elements of partially cured fibre-reinforced sheet material at least partially is provided during manufacturing of the partially cured fibre- reinforced sheet material. This is particularly easily made when the cured fibre- reinforced sheet material is manufactured by belt pressing, as the surface texture may be derived via a negative template on or surface texture of the belt of the belt press. In another embodiment, a foil is provided between the belt and the fibre-reinforced sheet material is formed in the belt press. Such a foil may also act as a liner and should be removed prior to introduction of the partially cured fibre-reinforced sheet material in the mould.

In a preferred embodiment, the facilitating effect of surface texture on the resin distribution during resin introduction is realised by providing a plurality of inner spacer elements between adjacent elements of the partially cured fibre-reinforced sheet material. The inner spacer elements may advantageously be selected from one or more members of the group consisting of a collection of fibres, such as glass fibres and/or carbon fibres, a solid material, such as sand particles, and a high melting point polymer, e.g. as dots or lines of resin. It is preferred that the inner spacer elements are inert during the resin introduction, and for example do not change shape or react with the introduced resin. Using inner spacer elements may be advantageous in many cases, as it does not require any particular method of manufacturing of the cured fibre-reinforced sheet material or a special pre-treatment of the cured fibre-reinforced sheet material. The inner spacing elements are preferably in the size range of 0.1 mm to 0.5 mm and separated by typically 1 cm to 2 cm, but both the sizes and the spaces may be suitable in some cases. Typically, the larger the inner spacing element, the larger the spacing can be allowed.
The surface texture may comprise surface elements. The surface elements may comprise a resin. The surface elements may be discrete or continuous. The surface elements may be arranged in a longitudinal direction of the sheet material. The surface elements may be arranged in a transverse direction of the sheet material. The surface elements may also be arranged in a direction so that they extend in both transverse and longitudinal directions.
The surface elements may be arranged to form a resin channel in one or more longitudinal and/or transverse directions.
The surface elements facilitate the distribution of the infusion resin and they space the sheet material.
To facilitate the introduction of resin this process may advantageously be vacuum assisted. In this case, the method further comprises the steps of forming a vacuum enclosure around the composite structure. The vacuum enclosure may preferably be formed by providing a flexible second mould part in vacuum tight communication with the mould. Thereafter a vacuum may be provided in the vacuum enclosure by a vacuum means, such as a pump in communication with the vacuum enclosure so that the resin may be introduced by a vacuum assisted process, such as vacuum assisted resin transfer moulding, VARTM. A vacuum assisted process is particularly suitable for large structures, such as wind turbine blade shell members, as long resin transportation distances could otherwise lead to premature curing of the resin, which could prevent further infusion of resin. Furthermore, a vacuum assisted process will reduce the amount of air in the wind turbine blade shell member and hence reduce the presence of air in the infused composite, which increases the strength and the reproducibility.

The infusion resin may be curable at temperatures of from 60 to 100 °C, preferably from 60 to 90 °C, more preferably from 80 to 100 °C. The resin may have a viscosity during the infusion phase of from 50 to 200 mPas, preferably from 100 to 160 mPas and more preferably of from 120 to 150 mPas. The neat infusion resin may have a density ranging of from 1.1 to 1.20 g/cm³; a flexural strength of from 60 to 150 N/mm², preferably from 90 to 140 N/mm²; an elasticity modulus of from 2.5 to 3.3 kN/mm², preferably from 2.8 to 3.2 kN/mm²; a tensile strength of from 60 to 80 N/mm², preferably from 70 to 80 N/mm²; a compressive strength of from 50 to 100 N/mm²; elongation at break of from 4 to 20 %, preferably from 8 to 16% and/or combinations of the aforesaid properties.

The infusion resin may be a vinylester resin and have one or more of the following properties:
- Liquid properties at 25 °C:
Brookfield viscosity (LVF, spindle #2 @ 12 rpm): 150 - 200 cps
Density 1.03 - 1.08 g/cm³

- Mechahical properties at 25 °C (neat cured resin):

| | |
|---|---|
| Tensile strength: 80 to 90 MPa | ASTM D 638-08 |
| Tensile modulus: 3500 to 3900 MPa | ASTM D 638-08 |
| Tensile elongation: 2 to 3.5 % | ASTM D 638-08 |
| Flexural strength: 120 to 150 MPa | ASTM D 790-07 |
| Flexural modulus: 3800 to 4100 MPa | ASTM D 790-07 |

The infusion resin may be a polyester resin and have one or more of the following properties:
- Liquid properties at 23 °C:
Brookfield viscosity (LVF, spindle #2 @ 12 rpm): 150 - 180 cps

- Mechanical properties at 25 °C (neat cured resin):

| | |
|---|---|
| Tensile strength: 62 to 69 MPa | ASTM D 638-08 |
| Tensile modulus: 3100 to 3500 MPa | ASTM D 638-08 |
| Tensile elongation: 3.5 to 4 % | ASTM D 638-08 |
| Flexural strength: 120 to 130 MPa | ASTM D 790-07 |
| Flexural modulus: 3400 to 3600 MPa | ASTM D 790-07 |

The infusion resin may be an epoxy resin and have one or more of the following properties:
- Liquid properties at 25 °C:
Brookfield viscosity (LVF, spindle #2 @ 12 rpm): 700 - 1100 mPa.s Epoxy equivalent weight 160-190, epoxy value (equivalent/100g) 0.54 - 0.60 Density 1.13 - 1.17 g/cm³

- Mechanical properties at 25 °C (neat cured resin):

| | |
|---|---|
| Tensile strength: 80 to 90 MPa | ASTM D 638-08 |
| Tensile modulus: 3500 to 3900 MPa | ASTM D 638-08 |
| Tensile elongation: 8 to 16 % | ASTM D 638-08 |
| Flexural strength: 90 to 120 MPa | ASTM D 790-07 |
| Flexural modulus: 2700 to 3400 MPa | ASTM D 790-07 |

A suitable infusion resin may be Epikote^{™} MGS RIM 135 as supplied by Hexion. Other suitable resin systems are PRIME^{™} 20LV as supplied by Gurit, Airstone^{™} 760 resin with Airstone^{™} 762H or Airstone^{™} 766H hardener as supplied by the Dow Chemical Company.
Composite parts or members according to the invention or manufactured by the method according to the invention may either form a wind turbine blade shell individually or form a wind turbine blade shell when connected to one or more further such composite members, e.g. by mechanical fastening means and/or be adhesive. From such wind turbine blade shells, a wind turbine blade may advantageously be manufactured by connecting two such wind turbine blade shells by adhesive and/or mechanical means, such as by fasteners. Both the wind turbine blade shell and the combined wind turbine blade may optionally comprise further elements, such as controlling elements, lightning conductors, structural detectors, etc. In a particularly preferred embodiment, each blade shell consists of a composite member manufacturable by the method according to the invention. In another preferred embodiment, the wind turbine blade shell member manufactured by the method according to the invention forms substantially the complete outer shell of a wind turbine blade, i.e. a pressure side and a suction side which are formed integrally during manufacturing of the wind turbine blade shell member.
One aspect of the invention concerns a wind turbine blade comprising cured fibre- reinforced sheet material. The partially cured fibre-reinforced sheet material is positioned near the outer surface of the blade as partially overlapping tiles. In a preferred embodiment the partially cured fibre-reinforced sheet material is pultruded or band pressed partially cured fibre- reinforced sheet material and has been divided into elements of partially cured fibre-reinforced sheet material. In another preferred embodiment, a wind turbine blade according to the invention has a length of at least 40 m. The ratio of thickness, t, to chord, C, (t / C) is substantially constant for airfoil sections in the range between 75% < r / R < 95%, where r is the distance from the blade root and R is the total length of the blade. Preferably the constant thickness to chord is realised in the range of 70% < r / R < 95%, and more preferably for the range of 66% < r / R < 95%.
This may be realised for a wind turbine blade according to the invention due to the very dense packing of the fibres in areas of the cross section of the blade, which areas provide a high moment of inertia. Therefore, it is possible according to the invention to achieve the same moment of inertia with less reinforcement material and/or to achieve the same moment of inertia with a more slim profile. This is desirable to save material and to allow for an airfoil design according to aerodynamic requirements rather than according to structural requirements.
The sheet material may be used in combination with dry fibrous reinforcement material and/or resin preimpregnated fibrous reinforcement material (prepreg) and/or a solid resin. The sheet material may be pliable or conformable to a mould before final cure.

### BRIEF DESCRIPTION OF THE DRAWINGS

The invention will be explained more fully below with reference to exemplary embodiments as well as the drawings, in which
Fig. 1 shows a cross-section wind turbine blade shell member in the mould according to an embodiment of the invention,
Fig. 2 shows preferred resin transportation routes during introduction of resin according to another embodiment of the invention,
Fig. 3 shows details of resin transportation routes of Fig. 2
Fig. 4 shows effect of the thickness of the element of cured fibre-reinforced sheet material according to a further embodiment of the invention, and
Fig. 5 shows a sheet material according to another embodiment of the invention.

### DESCRIPTION OF THE DRAWINGS

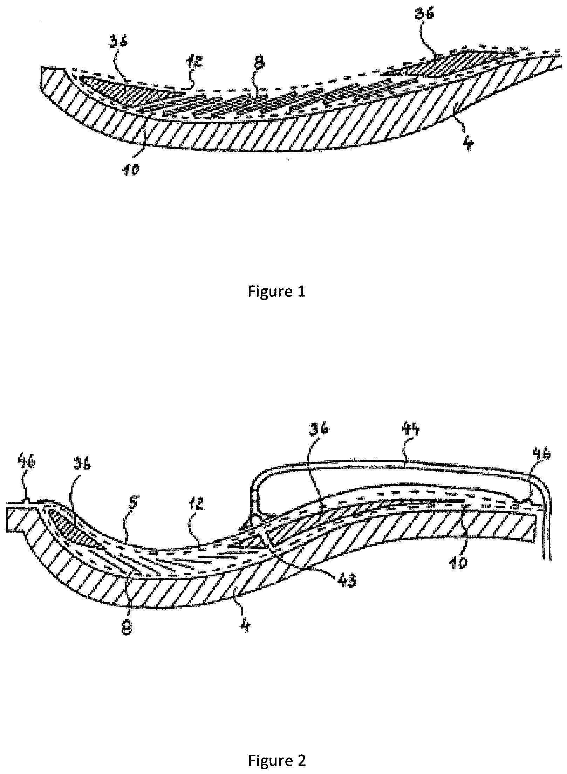

In Fig. 1 an example of a wind turbine blade shell member or part formed according to the method of the invention is shown in the mould 4- The mould 4 is typically a rigid member and may be combined with a second mould part (see element 5, Fig. 2) during introduction of resin. Typically such second mould part is flexible but it may also be rigid. Optionally, an outer surface layer material 10 is positioned in the mould. Such an outer surface layer 10 may e.g. be a prepreg or a thermoplastic coating material. Then a plurality of elements 8 of partially cured fibre-reinforced sheet material are positioned in the mould. Core elements 36, and further elements, such as e g. a lightning conductor system, a control system and a wind turbine blade monitoring system, may also be provided at this stage.

An optional inner surface layer material 12 may be provided over the elements 8 of partially cured fibre-reinforced sheet material if this is desired. The optional inner surface layer material may also be provided after introduction of resin between the elements, but the presence of an inner surface layer material is not essential for the wind turbine blade shell member. An inner surface layer material as well as an outer surface layer material may comprise fibres, which are oriented differently from the fibres of the elements of partially cured fibre-reinforced sheet material and hence e.g. increase the transverse strength of the wind turbine blade shell member.
Finally, resin is introduced between the elements. It is preferred that all the spaces between adjacent elements are filled with the resin, but a partial filling may suffice in some cases. To facilitate introduction of resin, the air between adjacent elements may be removed prior to introduction of resin, e.g. by vacuum as discussed elsewhere.

One of the major advantages of the use of elements of partially cured fibre-reinforced sheet material is that the reinforcement material may be positioned with very high freedom of design. In general, it is preferred that the reinforcement material is positioned as far away from the centreline of the structure as possible to realise a high momentum of the reinforcement. By using overlapping elements, this may substantially be achieved by a plurality of elements having the same shape or - in situations where a complex geometrical overall reinforcement structure is desired - by a plurality of elements having only a few different shapes. This is possible by varying the degree of overlapping and the angles between the outer surface of the composite surface and the elements of partially cured fibre-reinforced sheet material.
The element of reinforcement sheet material is a sub-assembly for the manufacturing of wind turbine blade shell members according to the invention and may be manufactured onsite in close relation to the lay-up and manufacturing of the complete wind turbine blade shell member. Alternatively the sub-assembly may be manufactured separately from the manufacturing site of the composite structure. The sub-assembly may comprise one or more of the features, which have been described for the elements or for the partially cured fibre-reinforced sheet material, such as material content, a modified surface texture, an inner surface spacer element secured thereto, method of manufacture, shape and size and thickness under the same considerations. The sub-assembly may be transported in a stack of flat elements or coiled or bent into a suitable shape. The element sub-assemblies may be integrated into a further sub-assembly comprising a stack of sub-assemblies and optionally further elements, such as adhesive or mechanical fasteners to hold the elements together at least temporarily. Both types of sub-assemblies may advantageously be used for the manufacturing of wind turbine blade shell members as the flexibility of the sub-assembly suits the requirements to form the three dimensional shape of the blade air foil.

The elements of partially cured fibre-reinforced sheet material may be arranged to form a reinforcement structure in various overall shapes. Typically, the elements are arranged so as to form a reinforcement structure having one leg towards the first end of the wind turbine blade shell member to be manufactured and one leg towards the second end of the composite structure.

The exact positioning of the elements of partially cured fibre-reinforced sheet material in the mould may be facilitated by the use of a template means showing the desired positions. This is particularly the case when more complex systems of elements are desired or if manual lay-up is utilised. A template means may indicate the relative position of elements of partially fibre-reinforced sheet material towards an end corresponding to the end of the wind turbine blade shell member and/or indicate the relative position of at least one element relative to the mould, such as a mould edge or a feature of the mould, e.g a hole or a tap. The indication of the correct position may involve the longitudinal position, the width-wise position and/or the height-wise position relative to the mould and/or relative to further elements of partially cured fibre-reinforced sheet material or other elements to be included in the composite structure.
The template means may be integrated in the wind turbine blade shell member so that it is a single use template. In a preferred embodiment, the template means is integrated with a core element of the composite structure.
For large elements, such as for a wind turbine blade, where the length of the elements of partially cured fibre-reinforced sheet material typically is in the order of the total length of the wind turbine blade, it may be advantageous to apply several template means, e.g. one at each end and 1, 2, 3 or more on selected positions along the length of the blade

The elements of partially cured fibre-reinforced sheet material are bonded together by resin as discussed above, but during the lay-up, it is highly advantageous to at least temporarily fix the elements of partially cured fibre-reinforced sheet material to the mould and/or to another element in the mould, e.g. one or more cured fibre-reinforced sheet material element or another type of element. The temporary fixing should be formed so that the fixing does not lead to unacceptable defects during subsequent introduction of resin or during use of the final product. The fixing may for example involve one or more adhesive, such as a curable or non-curable hot-melt resin or a double-coated tape; or mechanical fastening means, such as a clamp, wires, wires with loops or an elastic member. In a particularly preferred embodiment, the means for temporary fixing are not removed prior to introduction of resin and hence included in the completed composite structure. In this case, it is particularly important that the means for temporary fixing is compatible with the elements of the final structure in both chemical terms (e.g. in relation to the resin) and mechanical terms (e.g. no formation of mechanically weak spots)

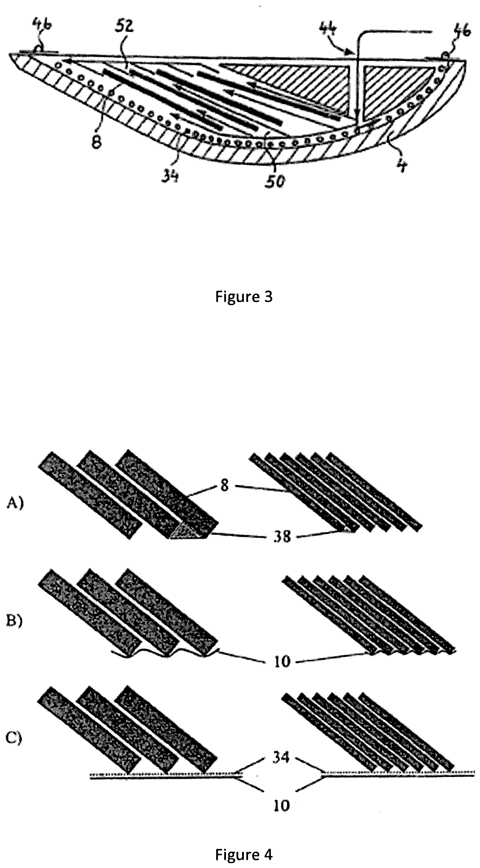

In a preferred embodiment, the elements of partially cured fibre-reinforced sheet material are positioned according to two to four, preferably three, templates positioned near the ends and away from the ends. The elements are temporarily fixed in the desired positions by hot melt, which is of the same type as the resin to be introduced to bond the elements and the templates are removed prior to resin introduction.
For a curved mould, such as a cross section of a mould for a wind turbine blade shell member as shown in Fig. 2 and Fig 3, the resin may advantageously be introduced between the elements from the convex side. As the rigid mould 4 typically is convex, this typically leads to resin being introduced through the rigid mould 4 or through the second flexible mould 5 and through the wind turbine blade shell member to near the outer surface. This is mainly due to the spacing between the elements being greater at the convex side than at a concave side as indicated in Fig. 3 by arrows 50 and 52, respectively. Fig 2 shows a preferred route of introducing the resin. Here, the resin is introduced through the second mould 5 via a resin passage 43 in a core element 36 to near the outer mould but other resin transport routes are also feasible. From near the mould surface, the resin is introduced between the elements 8. In addition to larger access to the space between the elements 8, the introduction of resin from near the mould surface towards the second mould allows for observation of complete resin introduction during processing as the resin must penetrate to the surface of the wind turbine blade shell member near the second mould. Here, the resin may be observed visually, particularly if the second mould part is transparent or transparent windows are provided in the second mould part.
In a particularly advantageous arrangement of the structural elements of the mould and the composite to be manufactured shown in Fig. 2, the elements 8 of partially cured fibre- reinforced sheet material are arranged partially overlapping starting from a first side of the mould, e.g. corresponding to leading edge or trailing edge of a wind turbine blade shell member. The resin introduction passage is arranged near the element 8 of partially cured fibre-reinforced sheet material away from the first side of the mould, e.g. corresponding to trailing edge or leading edge, respectively. Excess resin may advantageously be extracted near the first side of the mould near the surface of the second mould, corresponding to the leading edge or the trailing edge, respectively. Such an arrangement allows for a relatively straight resin transport, which reduces the likelihood of blocking of the resin distribution route and therefore provides a more robust design.
The elements 8 are relatively flexible in directions orthogonal to the plane of the element 8 and therefore conform to the inner surface of the mould 4 by flexing However, the elements 8 are also relatively rigid in directions in the plane of the element 8 and therefore tend to form sharp lines of connection to the mould. Such connections dramatically detain the resin transport transversely to the connection.
It is known to provide flexible open webs near the surface of a composite structure to facilitate resin infusion. However, such flexible webs would be substantially without effect when the elements are relatively rigid as flexible webs simply would be deformed by the high local pressure exercised by the edge of the elements 8. The surface spacer element 34 should also be rigid. Experimental work has shown that a composite material having an open structure, such as a grid or a grill, and comprising fibres and fully cured resin will be able to maintain the resin transport transversely the connection between the edges of the elements 8 and the mould 4. It has been found that a composite consisting of a cured glass fibre-reinforced grid or other open structure provides a particularly advantageous structure for a surface spacer element, as the glass fibres are very affordable and relatively thick. In a particularly preferred embodiment, the cured grid is an open biax structure. The grid may advantageously be oriented relative to the edges of the cured fibre-reinforced sheet material so that the edges are not parallel to any of the biax directions as this reduces the likelihood of accidental blockage of resin transport under the edges via the surface spacer element. A suitable grid is Polyspeed G-EV 750GI as supplied by Hexcel Corporation.

In addition to facilitating resin transport, the surface spacer material may also contribute to the mechanical strength of the composite structure, particularly with respect to the strength orthogonal to the main direction of the reinforcement fibres of the cured fibre-reinforced sheet material. This is mainly due to the fact that the fibres of the surface spacer material typically are positioned in a non-parallel arrangement relative to the main direction of the reinforcement fibres of the cured fibre-reinforced sheet material. Typical and preferred orientation of a biax surface spacer material is +-450 relative to the main direction of the reinforcement fibres of the cured fibre- reinforced sheet material.

The flexibility of the element 8 decreases as the thickness of the element is increased. Furthermore, the steps between the edges of the individual element increase as the thickness of the elements are increased. This is illustrated in Fig 4, where a stack of partially overlapping elements 8 of cured fibre-reinforced sheet material is schematically shown. In Fig. 4A, two stacks are shown, the stack to the left having thick elements 8 and the stack to the right having thin elements 8. It is observed that the triangular space 38 between the elements and an outer mould is larger for the thick elements 8 than for the thin elements 8. This may lead to a wavy outer surface texture of completed wind turbine blade shell member as shown in Fig. 4B, e.g. due to curing shrinkage of the resin or thermal contraction based on differences in thermal expansion and/or flexibility of the resin filling the triangular spaces 38 and other elements in the completed composite structure.

In Fig. 4C, it is illustrated how a cured material, such as a surface spacer element as described above, may diminish or remove the tendency to form a wavy outer surface texture by decreasing the dependency of the surface characteristics on the properties of the resin and the thickness of the elements.

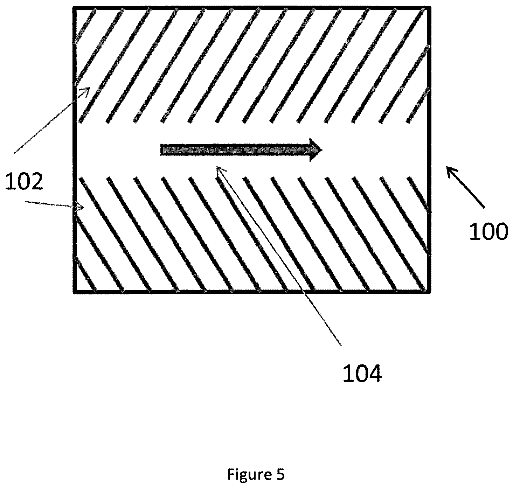

Figure 5 shows a sheet material 100 comprising a comprising reinforcement fibres in the form of Panex 35 carbon fiber (25K) and an epoxy reinforcement resin material having an epoxy equivalent weight in the range of from 100 to 200 as supplied by Hexcel, and a dicyandiamine hardener. The sheet material comprises a surface structure 102 for spacing the sheet material from adjacent moulding materials. The structure 102 consists of discrete surface elements in the form of cured resin which provide resin distribution channels to promote flow of the infusion resin in both a longitudinal direction 104 and in a transverse direction to the sides of the sheet material 100. The sheet also has a central vein as indicated by the arrow 104 which allows the resin to flow in a longitudinal direction.

In use, the material 100 may be provided in a mould in combination with additional layers 100 or with dry reinforcement or even prepreg material layers to form a mould assembly.
The material 100 may be cured or part cured and it may be pliable to conform to the mould surface.

In a preferred embodiment, the plurality of elements of partially cured fibre-reinforced sheet material comprises at least two types of fibres. The fibres are preferably selected from the group consisting of carbon fibres, glass fibres, aramid fibres and natural fibres, such as cellulose-based fibres, preferably wood fibres.
The fibres may be arranged so that one or more of the elements comprises two or more types of fibres, such as e.g. a combination of carbon fibres with wood fibres or carbon fibres with glass fibres. In a particularly preferred embodiment, the plurality of elements comprises a first group of elements, which has a first fibre composition, and a second group of elements, which has a second composition. Preferably, the first fibre composition consists substantially of carbon fibres so that the first group of elements is particularly stiff relative to the weight and volume of the cured fibre- reinforced sheet material. The second fibre composition may e.g. comprise wood fibres and/or glass fibres. More than two groups of elements may be present, such as three, four, five, six or even more groups.
In one embodiment of the invention, the shape of the elements is similar for all elements irrespective of the group it belongs to. In another embodiment, the shapes of elements that belong to different groups are dissimilar. In a third embodiment, the shape of elements varies within an individual group of elements.
Preferred combinations of elements are a) a group of elements reinforced by carbon fibres in combination with a group of elements reinforced by glass fibres; b) a group of elements reinforced by carbon fibres in combination with a group of elements reinforced by wood fibres; c) a group of elements reinforced by carbon fibres in combination with a group of elements reinforced by glass fibres and a group of elements reinforced by wood fibres
These groups are particularly useful for manufacturing of elements for wind turbine blade shells, as the reinforcement requirements including stiffness and strength requirements vary with the distance from the blade root. A combination of this type utilising the cured fibre-reinforced sheet material technology according to the present invention will therefore provide a structurally superior and affordable blade.

There is thus provided a material, an assembly and a method as hereinbefore described.

## Claims

1. A fiber reinforced sheet material comprising reinforcement fibres and a reinforcement resin material cured from 30 to 90%, wherein the percentage of curing represents the percentage of exothermic energy released upon curing in relation to the fully cured sheet material; and further wherein, before curing, the reinforcement resin material comprises an epoxy resin having an epoxy equivalent weight in the range of from 200 to 500 or from 50 to 250, preferably from 100 to 200 and/or combinations of the aforesaid values, and an amine hardener; the sheet material comprising a surface structure for spacing the sheet material from adjacent moulding materials comprising structure elements for conducting the flow of an infusion resin.

2. A material of claim 1, wherein the adjacent moulding materials comprise additional sheet materials, the surface structure providing resin infusion pathways for conducting an infusion resin between the sheet materials.

3. A material of claim 1 or 2, wherein the reinforcement resin is curable at a cure temperature of 60 or 70 or 80 or 90 or 100 or 120 °C in a time to cure of less than 5, or 10, or 15, or 20, or 30, or 40 or 60 seconds, and/or combinations of the aforesaid temperatures and time to cure.

4. A material of claim 1 or 2 or 3, wherein the reinforcement resin comprises a pigment or dye.

5. A material of any of the preceding claims, wherein the material is supplied on a coil or roll.

6. A material of any of the preceding claims, wherein the reinforcement fibres are arranged in unidirectional tows.

7. A material of any of the preceding claims, wherein the sheet material is infusion resin permeable.

8. A material of any of the preceding claims, wherein the structure elements conduct flow in a transverse and/or longitudinal direction in relation to a central resin flow channel or vein.

9. A method of producing a fiber reinforced sheet material comprising reinforcement fibres and a reinforcement resin material, comprising
a. impregnating reinforcement fibres with the reinforcement resin material, said reinforcement resin material comprising an epoxy resin having an epoxy equivalent weight in the range of from 50 to 250, preferably from 100 to 200, and an amine hardener,
b. providing the sheet material comprising a surface structure for spacing the sheet material from adjacent moulding materials comprising structure elements for conducting the flow of an infusion resin; and
c. online curing of the sheet material from 30 to 90%, wherein the percentage of curing represents the percentage of exothermic energy released upon curing in relation to the fully cured sheet material.

10. A method according to claim 9, wherein the material is cured at a cure temperature of 60 or 70 or 80 or 90 or 100 or 120 °C in a time to cure of less than 5, or 10, or 15, or 20, or 30, or 40 or 60 seconds, and/or combinations of the aforesaid temperatures and time to cure.

11. An assembly of one or more layers of a sheet material as defined in any of claims 1 to 8 comprising in addition one or more layers of fibrous reinforcement and/or one or more layers of resin impregnated fibrous reinforcement.

12. An assembly according to claim 11 forming a wind turbine part or blade.

## Patentansprüche

1. Faserverstärktes Bahnenmaterial, umfassend Verstärkungsfasern und ein Verstärkungsharzmaterial, das zu 30 bis 90 % gehärtet ist, wobei der Härtungsprozentwert den Prozentwert der bei dem Härten freigesetzten exothermen Energie bezogen auf das vollständig gehärtete Bahnenmaterial darstellt; und wobei ferner vor dem Härten das Verstärkungsharzmaterial ein Epoxyharz mit einem Epoxy-Äquivalentgewicht in dem Bereich von 200 bis 500 oder von 50 bis 250, vorzugsweise von 100 bis 200, und/oder Kombinationen der genannten Werte, und einen Aminhärter umfasst; wobei das Bahnenmaterial eine Oberflächenstruktur zum Beabstanden des Bahnenmaterials von benachbarten Formmaterialien umfasst, umfassend Strukturelemente zum Leiten des Flusses eines Infusionsharzes.

2. Material gemäß Anspruch 1, wobei die benachbarten Formmaterialien zusätzliche Bahnenmaterialien umfassen, deren Oberflächenstruktur Harzinfusionswege zum Leiten eines Infusionsharzes zwischen den Bahnenmaterialien bereitstellt.

3. Material gemäß Anspruch 1 oder 2, wobei das Verstärkungsharz bei einer Härtungstemperatur von 60 oder 70 oder 80 oder 90 oder 100 oder 120 °C in einer Härtungszeit von weniger als 5 oder 10 oder 15 oder 20 oder 30 oder 40 oder 60 Sekunden und/oder Kombinationen der genannten Härtungstemperaturen und -zeiten härtbar ist.

4. Material gemäß Anspruch 1 oder 2 oder 3, wobei das Verstärkungsharz ein Pigment oder einen Farbstoff umfasst.

5. Material gemäß einem der vorstehenden Ansprüche, wobei das Material auf einer Spule oder Rolle geliefert wird.

6. Material gemäß einem der vorstehenden Ansprüche, wobei die Verstärkungsfasern in unidirektionalen Strängen angeordnet sind.

7. Material gemäß einem der vorstehenden Ansprüche, wobei das Bahnenmaterial Infusionsharz-durchlässig ist.

8. Material gemäß einem der vorstehenden Ansprüche, wobei die Strukturelemente Fluss in Quer- und/oder Längsrichtung bezogen auf eine(n) zentrale(n) Harzflusskanal oder -ader leiten.

9. Verfahren zum Herstellen eines faserverstärkten Bahnenmaterials, das Verstärkungsfasern und ein Verstärkungsharzmaterial umfasst, umfassend
a. Imprägnieren von Verstärkungsfasern mit dem Verstärkungsharzmaterial, wobei das Verstärkungsharzmaterial ein Epoxyharz mit einem Epoxy-Äquivalentgewicht in dem Bereich von 50 bis 250, vorzugsweise von 100 bis 200, und einen Aminhärter umfasst;
b. Bereitstellen des Bahnenmaterials, das eine Oberflächenstruktur zum Beabstanden des Bahnenmaterials von benachbarten Formmaterialien umfasst, umfassend Strukturelemente zum Leiten des Flusses eines Infusionsharzes; und
c. Online-Härten des Bahnenmaterials zu 30 bis 90 %, wobei der Härtungsprozentwert den Prozentwert der bei dem Härten freigesetzten exothermen Energie bezogen auf das vollständig gehärtete Bahnenmaterial darstellt.

10. Verfahren gemäß Anspruch 9, wobei das Material bei einer Härtungstemperatur von 60 oder 70 oder 80 oder 90 oder 100 oder 120 °C in einer Härtungszeit von weniger als 5 oder 10 oder 15 oder 20 oder 30 oder 40 oder 60 Sekunden und/oder Kombinationen der genannten Härtungstemperaturen und -zeiten gehärtet wird.

11. Baugruppe aus einer oder mehreren Schichten aus einem Bahnenmaterial gemäß einem der Ansprüche 1 bis 8, umfassend zusätzlich eine oder mehrere Schichten von faserartiger Verstärkung und/oder eine oder mehrere Schichten von harzimprägnierter Faserverstärkung.

12. Baugruppe gemäß Anspruch 11, die einen Windturbinenteil oder -flügel bildet.

## Revendications

1. Matériau sous forme de feuille renforcé par des fibres, comprenant des fibres de renforcement et un matériau de résine de renforcement durci de 30 à 90 %, le pourcentage de durcissement représentant le pourcentage d'énergie exothermique libéré lors du durcissement par rapport au matériau sous forme de feuille entièrement durci ; et en outre dans lequel, avant le durcissement, le matériau de résine de renforcement comprend une résine époxyde ayant un poids équivalent d'époxy de 200 à 500 ou de 50 à 250, préférablement de 100 à 200 et/ou des combinaisons des valeurs susmentionnées, et un durcisseur aminique ; le matériau sous forme de feuille comprenant une structure de surface pour espacer le matériau sous forme de feuille des matériaux de moulage adjacents, comprenant des éléments de structure pour conduire l'écoulement d'une résine d'infusion.

2. Matériau selon la revendication 1, dans lequel les matériaux de moulage adjacents comprennent des matériaux sous forme de feuilles additionnels, la structure de surface formant des voies d'infusion de résine pour conduire une résine d'infusion entre les matériaux sous forme de feuilles.

3. Matériau selon la revendication 1 ou 2, dans lequel la résine de renforcement est durcissable à une température de durcissement de 60 ou 70 ou 80 ou 90 ou 100 ou 120 °C en un temps de durcissement de moins de 5, ou 10, ou 15, ou 20, ou 30, ou 40 ou 60 secondes, et/ou des combinaisons des températures et des temps de durcissement susmentionnés.

4. Matériau selon la revendication 1 ou 2 ou 3, dans lequel la résine de renforcement comprend un pigment ou un colorant.

5. Matériau selon l'une quelconque des revendications précédentes, le matériau étant fourni sur une bobine ou un rouleau.

6. Matériau selon l'une quelconque des revendications précédentes, dans lequel les fibres de renforcement sont disposées en brins unidirectionnels.

7. Matériau selon l'une quelconque des revendications précédentes, le matériau sous forme de feuille étant perméable à la résine d'infusion.

8. Matériau selon l'une quelconque des revendications précédentes, dans lequel les éléments de structure conduisent l'écoulement dans une direction transversale et/ou longitudinale par rapport à un canal ou une veine centraux d'écoulement de résine.

9. Procédé pour la production d'un matériau sous forme de feuille renforcé par des fibres comprenant des fibres de renforcement et un matériau de résine de renforcement, comprenant :
a. l'imprégnation de fibres de renforcement avec le matériau de résine de renforcement, ledit matériau de résine de renforcement comprenant une résine époxyde ayant un poids équivalent d'époxyde de 50 à 250, préférablement de 100 à 200, et un durcisseur aminique,
b. la fourniture du matériau sous forme de feuille comprenant une structure de surface pour espacer le matériau sous forme de feuille des matériaux de moulage adjacents, comprenant des éléments de structure pour conduire l'écoulement d'une résine d'infusion ; et
c. le durcissement en ligne du matériau sous forme de feuille de 30 à 90 %, le pourcentage de durcissement représentant le pourcentage d'énergie exothermique libéré lors du durcissement par rapport au matériau sous forme de feuille entièrement durci.

10. Procédé selon la revendication 9, dans lequel le matériau est durci à une température de durcissement de 60 ou 70 ou 80 ou 90 ou 100 ou 120 °C en un temps de durcissement de moins de 5, ou 10, ou 15, ou 20, ou 30, ou 40 ou 60 secondes, et/ou des combinaisons des températures et des temps de durcissement susmentionnés.

11. Ensemble d'une ou plusieurs couches d'un matériau sous forme de feuille tel que défini dans l'une quelconque des revendications 1 à 8, comprenant en outre une ou plusieurs couches de renforcement fibreux et/ou une ou plusieurs couches de renforcement fibreux imprégné de résine.

12. Ensemble selon la revendication 11, formant une pièce ou une pale d'éolienne.
